# EUROPEAN PATENT SPECIFICATION

(11) **EP 4 002 750 B1**
(45) Date of publication and mention of the grant of the patent: **17.07.2024**
(21) Application number: 20209097.3
(22) Date of filing: 20.11.2020
(51) Int. Cl.: H04L 9/08

(54) **METHOD AND SYSTEM FOR INCREASING KEY-EXCHANGE RATES IN A SECURE MULTI-HOP FIBER NETWORK**
VERFAHREN UND SYSTEM ZUR ERHÖHUNG DER SCHLÜSSELAUSTAUSCHRATEN IN EINEM GESICHERTEN VIELFACHEN-HOP GLASFASERNETZ
PROCÉDÉ ET SYSTÈME POUR AUGMENTER LES TAUX D'ÉCHANGE DE CLÉS DANS UN RÉSEAU À FIBRES OPTIQUES MULTI-HOPS SÉCURISÉ

(43) Date of publication of application: 25.05.2022
(73) Proprietor: Deutsche Telekom AG, 53113 Bonn (DE)
(72) Inventor: GUNKEL, Matthias, 64291 Darmstadt (DE); WISSEL, Felix, 64372 Ober-Ramstadt (DE)
(74) Representative: RDL Patentanwälte PartG mbB

(56) References cited:
- EP-B1- 3 544 223
- WO-A2-2009/093034
- GB-A- 2 560 564
- BING QI ET AL: "Feasibility of quantum key distribution through dense wavelength division multiplexing network", ARXIV.ORG, CORNELL UNIVERSITY LIBRARY, 201 OLIN LIBRARY CORNELL UNIVERSITY ITHACA, NY 14853, 3 June 2010 (2010-06-03), XP080481663, DOI: 10.1088/1367-2630/12/10/103042

## Description

The present invention refers to a method and a system for increasing a key-exchange rate in a secure fiber network, both the method and the system being based on an entanglement-based QKD (Quantum Key Distribution) scheme over a plurality of spans, i.e. over multiple fiber hops.

WO 2009/093034 A2 relates to a method of performing quantum key distribution across a network, in particular between a first node and a destination node connected via at least one intermediate node. The method involves the first node first agreeing a quantum key, i.e. a cryptographic key derived by QKD with the first intermediate node in the path using any known QKD technique. Next the intermediate node exchanges a quantum signal, for instance a series of suitably randomly modulated signal photons, with the next node in the path - which is termed the targeted node. The intermediate node communicates with the first node using the previous established quantum key details of the quantum signal sent or received by the intermediate node. The first node then performs a key agreement step to agree a quantum key directly with the targeted node.

The EP patent EP 3 544 223 B1 describes an increased key-exchange rate over one single span in a secured fiber network. The method described therein is based on EQSE ("Entangled Quantum State Emission"), i.e. an emission of unmodulated entangled photons on the sender side, i.e. herein also called Alice module, and following Bell measurements on the receiver side, i.e. herein also called Bob module, which allow an indirect quantum secured key exchange over a classical channel, i.e. a data channel. According to EP 3 544 223 B1 Alice emits entangled photons at a wavelength λ_{EQSE} over two (or more) independent/disjunct fibers to Bob. Bob performs Bell measurements, i.e. Bob checks, at randomly selected time intervals of a Bell measurement, whether the photons received by Bob are still entangled with one another at the time of the Bell measurement. Bob determines, if the Bell measurement shows that the photons are not entangled, that at the time of the Bell measurement on at least one of the at least two quantum channels and at the wavelength λ_{EQSE} there exists a potential interceptor. This conclusion can be drawn because the interceptor himself carries out a measurement at the photons when intercepting the fiber and thus disengages the entanglement of the photons.

Alice transmits at the wavelength λ_{EQSE} key material in a key transmission phase to Bob via a data channel that is superimposed on one of the disjunct quantum channels by random selection, wherein the data channel is designed for a power many orders of magnitude greater than that of the respective two or more quantum channels. In the case that Bob detects an interceptor, the key material most recently transmitted via the data channel which has been superimposed on at least one of the quantum channels by random selection, is then discarded.

Since the respective duration of the key transmission phase is a random process, the interceptor, also called Eve, cannot make any predictions and, thus, cannot develop a strategy as to when it should intercept the fiber to gain an information advantage. The interceptor runs the risk of either destroying the entanglement of the photons during its interception or it misses large parts of the key material.

The EP patent EP 3 544 223 B1 discloses a key exchange scheme over one single quantum span which can fade continuously variable between security requirements and performance, i.e. key-exchange rate. A fading parameter is the mean duty cycle, i.e. the ratio between the mean duration of the transmission of the entangled photons and the mean duration of the key exchange over the data channel (i.e. of the key transmission phase). Such fading parameter is chosen such that the time interval for the EQSE part, i.e. the mean duration of the transmission of the entangled photons is long enough to ensure a reliable statistic of the Bell measurements, but also as short as possible in order to guarantee an acceptable high key exchange rate.

The photons which are used at the Bob module for the Bell measurements, suffer a respective attenuation on the two disjunct quantum channels. Above a certain threshold of range, the measurement is massively influenced by unavoidable interference effects. Depending on the sensitivity of the measuring equipment, such threshold is in the range of 60 km to 80 km, at the maximum at 100km. Interference effects may be electronic noise of respective components.

Therefore, the range is limited to only one fiber span. A direct connection between nodes in a typical national backbone network is not possible therewith.

Therefore, it is an object of the present invention to provide a possibility to increase the key-exchange rate over multiple fiber spans, also called fiber hops, in a secure fiber network.

The above-mentioned object is solved by the method and the system with the features of the respective independent claims. Further embodiments are presented by the following description and the respective dependent claims.

The present invention provides a method and a system for a tap-proof exchange of key material between a sender and a receiver in a glass fiber network.

The present disclosure refers to a method for exchanging key material with no possibility of interception between a sender and a receiver for a key for encrypting a message in a glass fiber network, wherein one or more intermediate stations are located on a route between the sender and the receiver which divide the route accordingly in two or more sections wherein each intermediate station comprises a receiver unit, a sender unit and at least one optical fiber amplifier, wherein time sequentially, starting from the sender, for each section, at least two photons are entangled with one another and each photon is sent via a respective quantum channel of a respective glass fiber with a wavelength λ_{EQSE} over the respective section, wherein the respective two quantum channels on the respective section are disjunct relative to one another, and wherein, at a randomly selected time and for a randomly selected duration, the key material is sent with a wavelength λ_{classical} in a key transmission phase from the sender to the receiver via at least one data channel wherein each data channel is superimposed for each section on at least one of the two disjunct quantum channels by random selection, wherein the at least one data channel is amplified sectionwise by the respective at least one optical amplifier. The wavelength λ_{EQSE} of the entangled photons, i.e. the entangled photon pair, and the wavelength λ_{classical} of the data channel are identical in order to prevent an attack with an optical filter. The times Alice, i.e. the sender, sends the entangled photons, are chosen completely randomly which is implemented, for example, via a Quantum Random Number Generator, QRNG. The time shifting between the photon transmission and the key transmission phase must be, according to the invention, a random process in order to be not predictable for a potential interceptor.

According to the invention, each intermediate station comprises at least one optical switch that is controlled by at least one control logic which has a functional connection to at least one power sensor. According to one embodiment of the proposed method the at least one optical switch guides, i.e. leads, in its activated state, the photons which have been sent over a respective immediately preceding section, to the respective receiver unit of the respective intermediate station and continues, in its deactivated state, the at least one data channel over the immediately following section (to the next intermediate station or the receiver) depending on a sensed power on a respective glass fiber at the respective intermediate station.

A functional connection between different components may be a direct connection or an indirect connection, respectively. Each functional connection may be a wired or a wireless connection. Each suitable communication technology may be used. The respective components, each may include one or more communications interfaces for communicating with each other. Such communication may be executed using a wired data transmission protocol, such as fiber distributed data interface (FDDI), digital subscriber line (DSL), Ethernet, asynchronous transfer mode (ATM), or any other wired transmission protocol. Alternatively, the communication may be wirelessly via wireless communication networks using any of a variety of protocols, such as General Packet Radio Service (GPRS), Universal Mobile Telecommunications System (UMTS), Code Division Multiple Access (CDMA), Long Term Evolution (LTE), wireless Universal Serial Bus (USB), and/or any other wireless protocol. The respective communication may be a combination of a wireless and a wired communication.

The activated state of the optical switch may be a state in which the optical switch is open and the deactivated state of the optical switch may be a state in which the optical switch is closed or vice versa depending on the agreed definition or the concrete wiring.

The at least one power sensor is configured to detect a strongly increasing or decreasing level of optical power on an optical fiber, i.e. on a respective glass fiber. Then, by means of the at least one control logic (when detecting such a level overflow or level underflow including a hysteresis and an adapted activation) the respective optical switch is toggled. The optical switch has changeover times in the range of about 10 ms. The respective receiver unit of the respective intermediate station is a so-called EQSE receiver and is configured to perform a respective Bell measurement. The receiver, also called Bob module comprises at least one classical receiver that is configured to receive and process data that are transmitted via the data channel, and an EQSE receiver. The sender, also called Alice module comprises at least one classical sender that is configured to send data via the data channel, and an EQSE sender.

As mentioned above, classical wavelengths of, for example, 10Gbit/s or 100Gbit/s can be transmitted by means of optical amplifiers over distances of more than 1000km, i.e. the range of such classical wavelengths is more than one order of magnitude larger than that of quantum channels.

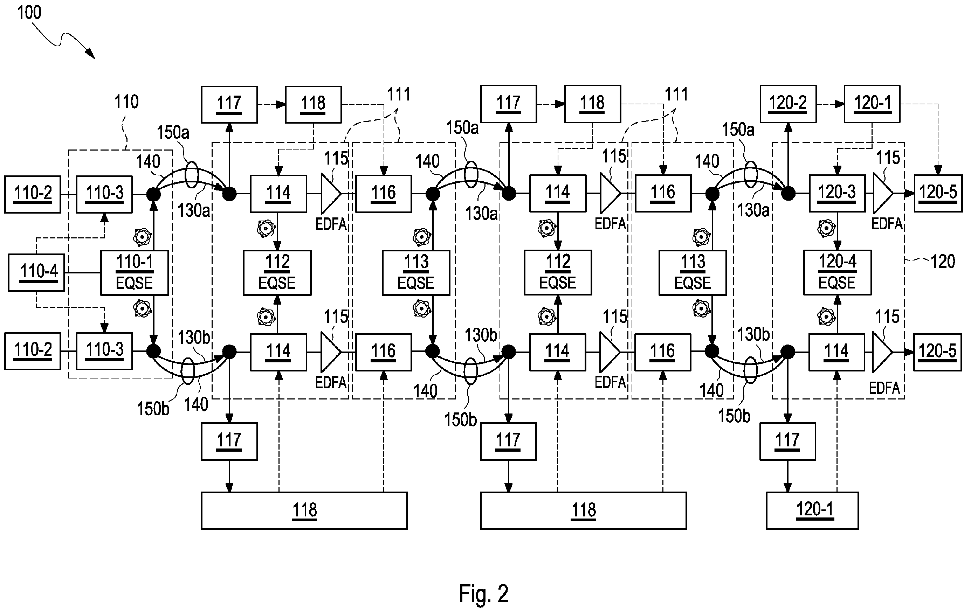

Therefore, the present invention proposes to divide the route between the sender and the receiver into two or more sections and, thus, a cascading of the respective quantum channels over the two or more sections. The respective quantum channels run between the EQSE sender of the Alice module, the respective EQSE receivers and EQSE senders / EQSE transmitters of the respective intermediate stations and the EQSE receiver of the Bob module (as shown in Figure 2). Each intermediate station is further provided with at least one optical amplifier, also called EDFA (Erbium Doped Fiber Amplifier), which is assigned to a respective glass fiber and configured to amplify the data channel such that the data can be transmitted over a larger range with a sufficiently good signal-to-noise-ratio. A significant optical crosstalk of the respective quantum channels on the data channel can be excluded because the respective power levels are more than one magnitude different from each other.

So that there is conversely no crosstalk of the data channel on the respective quantum channels, i.e. the Bell measurements, there is provided, according to the invention, at each intermediate station at least one variable optical attenuator, VOA. The VOA is configured to ensure that, outside the key transmission phase, a respective Bell measurement at the immediately following intermediate station on the way to the receiver or at the receiver, is not disturbed by a signal noise caused by a respective optical fiber amplifier. The VOA may be realised, i.e. implemented via an optical switch whose one output may be simply left open outside the key transmission phase and otherwise closed. The VOA is connected to a control logic. Each glass fiber is equipped, at each station, with a power sensor, an optical switch and a VOA, respectively. The control logic connected to the respective power sensor and assigned to the respective optical switch and the control logic of the VOA may be combined, i.e. fused, in one single control logic. It is also possible that each intermediate station comprises a first control logic for the at least one optical switch, wherein the first control logic is connected to the at least one power control / power sensor, and a second control logic for the at least one VOA separate from the first control logic. Furthermore, each intermediate station may comprise a first control logic and a second control logic or a combined control logic which are separate from the respective control logics of the other intermediate stations, respectively. Generally, the Bob module also comprises a control logic connected to a respective power sensor and an optical switch that is configured to lead in its activated state, the photons which have been sent over a respective immediately preceding section, to the EQSE receiver and continues, in its deactivated state, the at least one data channel to the classical receiver depending on a sensed power at an input of the Bob module. The Alice module comprises an EQSE sender, at least one data sender and at least one VOA that is controlled by a steering logic. Outside the key transmission phase, the VOA is switched in its activated state such that there is no crosstalk of the data channel on the respective quantum channels so that entangled photons which are sent by the EQSE sender via respective quantum channels are not disturbed.

According to a further embodiment, there is provided a superordinate control logic in which all control logics are implemented, i.e. fused.

According to a further embodiment of the proposed method, the receiver units at the respective intermediate stations and the receiver, i.e. the EQSE receiver at the Bob module, check, at randomly selected time intervals of a respective Bell measurement, whether the photons received by the respective receiver units and the receiver, i.e. the EQSE receiver at the Bob module, respectively, are still entangled with one another at the time of the respective Bell measurement.

If at least one of the respective Bell measurements shows that the photons are not entangled, the respective receiver unit at the respective intermediate station and/or the EQSE receiver at the Bob module determine that at the time of the respective Bell measurement on at least one of the two quantum channels and at the wavelength λ_{EQSE} there exists a potential interceptor, whereupon the key material most recently transmitted via the data channel over the respective section is then discarded.

As already mentioned above, the at least one data channel is designed for a power many orders of magnitude greater than that of the respective quantum channels over the respective sections.

According to a further embodiment of the proposed method, for each section a data channel is superimposed at the same time on each of the two disjunct quantum channels, respectively.

There are two alternatives:
1. Both data channels are activated and deactivated randomly and uncorrelated with each other. In the first alternative there is no need for a steering logic on the sending side. However, in the chain of the subsequent intermediate stations, at each intermediate station separate control logics for the respective VOAs, one for each of the respective quantum channels, are required. Therefore, the time share for the Bell measurements relative to the key transmission phase decreases accordingly.
2. Both data channels are activated and deactivated synchronously with each other. In this case one control logic for all local VOAs at a respective one of the intermediate stations is sufficient. Therefore, the time share for the Bell measurements relative to the key transmission phase remains unchanged compared to the case of only one data channel.

According to another embodiment, at least one intermediate station comprises at least one optical switch that is arranged in transmission direction behind the respective at least one optical amplifier, EDFA, and leads in its activated state one of the at least one data channel to another route between the sender and another receiver, i.e. another Bob module, wherein the other route is secured by the same wavelength λ_{EQSE} as described before. That means that a junction is generated and on the other route also one or more intermediate stations are located between the junction and the other receiver which divide the other route accordingly in two or more sections wherein each intermediate station also comprises a receiver unit, a sender unit and at least one optical fiber amplifier, so that respective Bell measurements and a respective key transmission phase can be realised as described above, i.e. without any junction. All involved Bob modules are designed in the same way to carry out the method described above for receiving key material from the Alice module.

The described method may be used to generate dynamically a complex meshed network topology for exchanging key material with no possibility of interception between the sender and a respective receiver wherein each route within the network topology is secured by the same wavelength λ_{EQSE}. The key transporting wavelength λ_{classical} must still be the same as λ_{EQSE} but can be arbitrarily connected within the topology and, thus, be used simultaneously for different Bob modules. Thereby, wavelength blockades must be excluded.

According to a further aspect of the present invention, the method is extended to a plurality of data channels between the sender and a respective receiver in the form of a WDM, wherein the data channels have different wavelengths and the respective two disjunct quantum channels which are superimposed by random selection by a respective one of the data channels have the same wavelength as the respective one of the data channels. In addition, all data channels involved should be activated and deactivated synchronously for that the time duration of the Bell measurements is not reduced. In the case that one of the Bell measurements indicates an increased interceptor risk for one of the different wavelengths, all key material which has been transmitted just before via the data channels, should be discarded.

According to one embodiment, the photons that originally resulted from an original condition without polarization are entangled on the side of the sender or the respective sender unit at the intermediate stations, respectively, such that a sum of the respective polarizations of the respective photons results in zero total polarization. According to an alternative embodiment, the photons are energy-time-entangled, i.e. energy-time entangled photon pairs are generated, i.e. an energy-time entanglement-based quantum key distribution is used.

Furthermore, a respective quantum channel that is superimposed by a respective data channel is deactivated and/or switched off for the duration of the transmission of the key material via the respective data channel.

The respective receiver, i.e. the respective Bob module, provided the respective Bell measurements show that the respective photons are still entangled over the respective sections, determines that at the moment of the respective Bell measurements no potential interceptor exists on any of the two quantum channels over the respective sections and at the wavelength λ_{EQSE}, and confirms to the sender via the respective data channel the key portions of the key material transferred during a key transmission phase comprising the moments of the Bell measurements or the time of the key transmission phase directly preceding the moments of the Bell measurements.

In addition to the key material transmitted from the sender to a respective receiver, it is possible that key material is conversely sent from the respective receiver to the sender, wherein the respective receiver then acts as sender and the sender acts as receiver, and a method as described before is executed.

Generally, the sender and the respective receiver, at set time intervals, agree upon the key material collected on the sender and receiver side during each respective interval, which is then subjected to a XOR operation on both the sender as well as the receiver side, whereby a part of a symmetrical key is generated both on the sender as well as the receiver side as the key for encrypting the message.

In a second aspect, a system for exchanging key material between a sender and a receiver with no possibility of interception, for a key to encrypt a message in a glass fiber network is provided. The system comprises at least the sender, the receiver, one or more intermediate stations which divide a route between the sender and the receiver accordingly in two or more sections wherein each intermediate station comprises a (EQSE) receiver unit, a (EQSE) sender unit, and at least one optical fiber amplifier, wherein the system further comprises over each section on the route from the sender to the receiver at least two respective disjunct quantum channels of respective glass fibers and at least one data channel that is temporarily superimposed on the disjunct quantum channels of each glass fiber by random selection, wherein at least the sender and the respective sender units are designed to entangle at least two photons with one another and to send one photon via each quantum channel of the two respective quantum channels with a wavelength λ_{EQSE} over the respective following section on the route from the sender to the receiver, wherein at least the sender is furthermore designed to send, during a key transmission phase, at a randomly selected time and for a randomly selected duration, via the at least one data channel wherein each data channel is superimposed by random selection on one of the disjunct quantum channels for the randomly selected duration, the key material from the sender to the receiver.

According to one embodiment of the proposed system, the receiver is configured as receiver and sender and the sender is configured as sender and receiver, and each can act with reversed roles.

According to a further embodiment, the system is configured to execute a method as described herein.

In a third aspect, there is provided a computer program product with a computer-readable medium and a computer program saved on the computer-readable medium with program coding means that are configured to execute a method as described herein when the computer program is run on a computer unit as a component of a system as described herein.

Due to the cascading of multiple Bell measurement sections a significantly increased indirect quantum secured key exchange over great distances can be realised.

It is possible to superimpose on both disjunct quantum channels of each section a respective data channel simultaneously. Thus, the key exchange rate can be doubled.

By limiting the length of a respective section, i.e. of a Bell measurement section, anintercepting probability of the entire route can be scaled within wide limits.

A complex meshed network topology for exchanging key material with no possibility of interception between the sender and a respective receiver can be generated dynamically wherein each route within the network topology is secured by the same wavelength λ_{EQSE}.

A WDM (Wavelength Division Multiplexing) extension is possible. Such an approach reduces glass fibers and EDFA amplifiers.

The present invention also shows all advantages of the method and the system as described in the EP patent EP 3 544 223 B1.

The following description is presented to enable any person skilled in the art to make, use and/or practice the disclosed subject matter, and is provided in the context of one or more particular implementations. Various modifications to the disclosed implementations will be readily apparent to those skilled in the art, and the general principles defined herein may be applied to other implementations and applications.

The details of one or more implementations of the subject matter of this specification are set forth in the accompanying drawings and the description. Other features, aspects, and advantages of the subject matter will become apparent from the description, the drawings, and the claims.

### Brief description of the drawings

Fig. 1 shows a schematic diagram illustrating a system and a method as described in the EP patent EP 3 544 223 B1.
Fig. 2 shows a schematic diagram illustrating an embodiment of the system according to the present invention which is configured to execute an embodiment of the method according to the present invention.

### Detailed description of the drawings

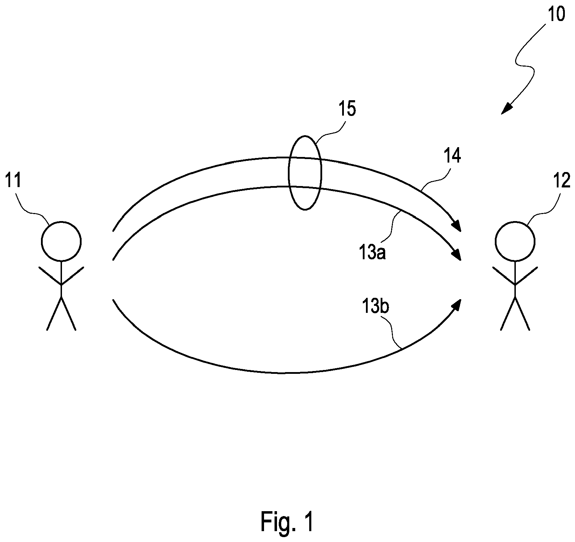

Figure 1 shows schematically a system 10 for exchanging key material with no possibility of interception between a sender 11 and a receiver 12 for a key for encrypting a message in a glass fiber network. There are two quantum channels between the sender 11 and the receiver 12. Those quantum channels are disjunct to each other. Further, there are at least two photons which are entangled by the sender 11, also called Alice (or Alice module). That means that those at least two photons are coupled with each other in such a way that they have one common property which can be maintained and cannot be resolved without disturbance, due to the laws of quantum physics, when being transmitted via a distance of the two quantum channels to the receiver 12, also called Bob (Bob module). The two photons are polarized, for example, such that all photons that are prepared by the sender 11 and sent simultaneously to the receiver 12 add up to a total polarisation of zero. Those entangled photons are transmitted each via a respective quantum channel 13a, 13b of a respective glass fiber 15 of the glass fiber network with a wavelength λ_{EQSE} from the sender 11 to the receiver 12. The two quantum channels 13a and 13b are disjunct to each other, i.e. they are completely independent and separate from each other. Those entangled photons are received by the receiver 12 and checked, at randomly selected time intervals of a respective Bell measurement, whether they are still entangled with one another at the time of the respective Bell measurement. If such a Bell measurement shows that the photons are not entangled, the receiver 12 determines that at the time of the respective Bell measurement on at least one of the two quantum channels 13a, 13b and at the wave length λ_{EQSE} there exists a potential interceptor, whereupon key material most recently transmitted (at a randomly selected time and for a randomly selected duration) via a data channel which has been superimposed on one of the two disjunct quantum channels 13a, 13b by random selection, is then discarded. Thus, the potential interceptor has no possibility to have a look at the key material which is actually used for encrypting a message between the sender 11 and the receiver 12.

While the transmission of respectively entangled photons over respective disjunct quantum channels 13a, 13b between the sender 11 and the receiver 12 is essentially continuous, the key material is sent, at a randomly selected time and for a randomly selected duration, in a key transmission phase from the sender 11 to the receiver 12 via at least one data channel 14 wherein the at least one data channel 14 is superimposed by random selection on one of the two quantum channels 13a, 13b. During the key transmission phase the respective quantum channel which is superimposed by the data channel 14 can be deactivated. However, this is not necessary because the data channel 14 has a power many orders of magnitude greater than that of the respective two quantum channels 13a, 13b so that the transmission of the photons via the respective quantum channel which is superimposed by the data channel 14, is completely masked.

Figure 2 shows a schematic diagram illustrating an embodiment of the system according to the present invention which is configured to execute an embodiment of the method according to the present invention. Figure 2 shows a system 100 for exchanging key material between a sender 110 and a receiver 120 with no possibility of interception, for a key to encrypt a message in a glass fiber network. The system 100 comprises at least the sender 110, the receiver 120, one or more intermediate stations 111, here two intermediate stations 111, which divide a route between the sender 110 and the receiver 120 accordingly in two or more sections, here three sections. Each intermediate station 111 comprises a receiver unit 112, i.e. an EQSE receiver 112, a sender unit 113, i.e. an EQSE sender 113, and at least one optical fiber amplifier, EDFA, 115. The system 100 further comprises over each section on the route from the sender 110 to the receiver 120 two respective disjunct quantum channels 130a, 130b of respective glass fibers 150a, 150b and at least one data channel 140, here two data channels 140 that are temporarily superimposed, respectively, on the disjunct quantum channels 130a, 130b of each glass fiber 150a, 150b by random selection. The sender 110 and the respective sender units 113 are designed to entangle at least two photons with one another and to send one photon via each quantum channel 130a, 130b of the two respective quantum channels 130a, 130b with a wavelength λ_{EQSE} over the respective following section on the route from the sender 110 to the receiver 120. The sender 110 is furthermore designed to send, during a key transmission phase, at a randomly selected time and for a randomly selected duration, via the at least one data channel 140 the key material from the sender 110 to the receiver 120 wherein each data channel 140 is superimposed by random selection on one of the disjunct quantum channels 130a, 130b for the randomly selected duration.

Each intermediate station 111 comprises at least one optical switch 114 that is controlled by at least one control logic 118 which has a functional connection to at least one power sensor 117. One optical switch 114 is assigned to each glass fiber 150a, 150b. The respective optical switch 114 guides, in its activated state, the photons which have been sent over a respective immediately preceding section, to the respective receiver unit 112 of the respective intermediate station 111 and continues, in its deactivated state, the at least one data channel 140 over the immediately following section (to the next intermediate station 111 or the receiver 120) depending on a sensed power at the respective intermediate station 111, i.e. at the respective glass fiber 150a, 150b. On the basis of the measured power it can be seen whether a key transmission phase is present and key material is being transferred via a respective data channel 140. The control logic 118 then switches the respective optical switch 114 accordingly.

The at least one optical amplifier 115, also called EDFA (Erbium Doped Fiber Amplifier), which is provided at each intermediate station 111, is configured to amplify the data channel 140 such that the data can be transmitted over a larger range with a sufficient good signal-to-noise-ratio. A significant optical crosstalk of the respective quantum channels 130a, 130b on the data channel 140 can be excluded because the respective power levels are more than one magnitude different from each other.

So that there is conversely no crosstalk of the data channel 140 on the respective quantum channels 130a, 130b, i.e. the Bell measurements, there is provided at each intermediate station 111 at least one variable optical attenuator, VOA, 116. The VOA 116 is configured to ensure that, outside the key transmission phase, a respective Bell measurement at the immediately following intermediate station 111 on the way to the receiver 120 or at the receiver 120, is not disturbed by a signal noise caused by the respective optical fiber amplifier 115. The VOA 116 may be realised, i.e. implemented via an optical switch whose one output may be simply left open outside the key transmission phase and otherwise closed. The VOA 116 is connected to a control logic. The control logic 118 connected to the power sensor 117 and the control logic 118 of the VOA 116 may be combined, i.e. fused, in one single control logic 118.

In the case illustrated here, for each section, two data channels 140 are superimposed at the same time on a respective one of the two disjunct quantum channels 130a, 130b, respectively. Furthermore, both data channels 140 are activated and deactivated synchronously with each other. There are two VOAs 116 and two optical switches 114, each VOA 116 and each optical switch 114 being assigned to one of the two glass fibers 150a, 150b. As both data channels 140 are activated and deactivated synchronously with each other, one control logic 118 for all local optical switches 114 and all local VOAs 116 at a respective one of the intermediate stations 111 is sufficient. Therefore, the time share for the Bell measurements relative to the key transmission phase remains unchanged compared to the case of only one data channel 140.

The Alice module 110 comprises an EQSE sender 110-1, at least one data sender 110-2 and at least one VOA 110-3 that is controlled by a steering logic 110-4. Outside the key transmission phase, the VOA 110-3 is switched in its activated state such that there is no crosstalk of the data channel 140 superimposed on one of the respective quantum channels 130a, 130b so that entangled photons which are sent by the EQSE sender 110-1 via respective quantum channels 130a, 130b are not disturbed. In the case illustrated here, the Alice module 110 comprises two data senders 110-2 and two VOAs 110-3, both being assigned to a respective one of the two glass fibers 150a, 150b. Therefore, the respective two data channels 140 can be served in a respective key transmission phase by one of the two data senders 110-2 and one of the two VOAs 110-3.

The Bob module 120 also comprises a control logic 120-1 for at least one power sensor 120-2 and at least one optical switch 120-3 that is configured to lead in its activated state, the photons which have been sent over a respective immediately preceding section, to the EQSE receiver 120-4 and continues, in its deactivated state, the at least one data channel 140 to the at least one classical receiver 120-5 depending on a sensed power at a respective glass fiber 150a, 150b at an input of the Bob module 120.

### List of reference signs

- 10: system
- 11: sender
- 12: receiver
- 13a, 13b: quantum channel
- 14: data channel
- 15: glass fiber

- 100: system
- 110: sender (Alice module)
- 110-1: EQSE sender
- 110-2: classical data sender
- 110-3: VOA
- 110-4: steering logic

- 120: receiver (Bob module)
- 120-1: control logic
- 120-2: power sensor
- 120-3: optical switch
- 120-4: EQSE receiver
- 120-5: classical data receiver

- 111: intermediate station
- 112: receiver unit, EQSE receiver
- 113: sender unit, EQSE sender
- 114: optical switch
- 115: optical fiber amplifier, EDFA
- 116: VOA
- 117: power sensor
- 118: control logic
- 130a, 130b: quantum channel
- 140: data channel
- 150a, 150b: glass fiber

## Claims

1. A method for a tap-proof exchange of key material between a sender (110) and a receiver (120) in a glass fiber network, wherein one or more intermediate stations (111) are located on a route between the sender (110) and the receiver (120) which divide the route accordingly in two or more sections wherein each intermediate station (111) comprises a receiver unit (112), a sender unit (113) and at least one optical fiber amplifier (115), wherein time sequentially, starting from the sender (110), for each section, at least two photons are entangled pairwise with one another and each photon is sent via a respective quantum channel (130a, 130b) of a respective glass fiber (150a, 150b) with a wavelength λ_{EQSE} over the respective section, wherein the at least respective two quantum channels on the respective section are disjunct relative to one another, and wherein, at a randomly selected time and for a randomly selected duration, the key material is sent in a key transmission phase from the sender (110) to the receiver (120) via at least one data channel (140) wherein each data channel (140) is superimposed for each section on one of the at least respective two disjunct quantum channels (130a, 130b) by random selection, wherein the at least one data channel (140) is amplified sectionwise by the respective at least one optical fiber amplifier (115) wherein each intermediate station (111) comprises at least one optical switch (114) that is controlled by at least one control logic (118) which has a functional connection to at least one power sensor (117) wherein at each of the intermediate stations (111) there is provided at least one variable optical attenuator (116) which ensures that, outside the key transmission phase, a respective Bell measurement at the immediately following intermediate station (111) on the way to the receiver (120) or at the receiver (120), is not disturbed by a signal noise caused by the respective at least one optical fiber amplifier (115) wherein the at least optical one switch (114), the at least one optical fiber amplifier (115) and the at least one variable optical attenuator (116) are connected in series.

2. The method according to claim 1 wherein the at least one optical switch (114) guides, in its activated state, the photons which have been sent over a respective immediately preceding section, to the respective receiver unit (112) of the respective intermediate station (111) and continues, in its deactivated state, the at least one data channel (140) over the immediately following section depending on a sensed power on a respective glass fiber (150a, 150b) at the respective intermediate station (111).

3. The method according to claim 1 or 2, wherein the receiver units (112) at the respective intermediate stations (111) and the receiver (120) check, at randomly selected time intervals of a respective Bell measurement, whether the photons received by the respective receiver units (112) and the receiver (120), respectively, are still entangled pairwise with one another at the time of the respective Bell measurement.

4. The method according to any one of the preceding claims wherein for each section a data channel (140) is superimposed at the same time on each of the respective two disjunct quantum channels (130a, 130b), respectively.

5. The method according to claim 4, wherein both data channels (140) are activated and deactivated randomly and uncorrelated with each other.

6. The method according to claim 4, wherein both data channels (140) are activated and deactivated synchronously with each other.

7. The method according to any one of the preceding claims wherein at least one intermediate station (111) comprises at least one optical switch that is arranged in transmission direction behind the respective at least one optical amplifier (115) and leads in its activated state one of the at least one data channel (140) to another route between the sender (110) and another receiver wherein the other route is secured by the same wave length λ_{EQSE} according to any one of claims 1 to 6.

8. The method according to claim 7 which is used to generate dynamically a complex meshed network topology for exchanging key material with no possibility of interception between the sender (110) and a respective receiver wherein each route within the network topology is secured by the same wavelength λ_{EQSE} according to any one of claims 1 to 6.

9. The method according to any one of the preceding claims which is extended to a plurality of data channels (140) between the sender (110) and a respective receiver in the form of a WDM, wherein the data channels have (140) different wavelengths and the at least respective two disjunct quantum channels (130a, 130b) which are superimposed by random selection by a respective one of the data channels (140) have the same wavelength λ_{EQSE} for a respective Bell measurement as the respective one of the data channels (140).

10. The method according to any one of the preceding claims, in which a respective quantum channel (130a) that is superimposed by a respective data channel (14) is deactivated and/or switched off for the duration of the transmission of the key material via the respective data channel (140).

11. The method according to any one of the preceding claims wherein the receiver (120), provided the respective Bell measurements show that the respective photons are still entangled over the respective sections, determines that at the moment of the respective Bell measurements no potential interceptor exists on any of the at least respective two quantum channels (130a, 130b) over the respective sections and at the wavelength λ_{EQSE}, and confirms to the sender (110) via the data channel (140) the key portions of the key material transferred during a key transmission phase comprising the moments of the Bell measurements or the time of the key transmission phase directly preceding the moments of the Bell measurements.

12. A system for a tap-proof exchange of key material between a sender (110) and a receiver (120), in a glass fiber network, wherein the system comprises at least the sender (110), the receiver (120), one or more intermediate stations (111) which divide a route between the sender (110) and the receiver (120) accordingly in two or more sections wherein each intermediate station (111) comprises a receiver unit (112), a sender unit (113), and at least one optical fiber amplifier (115), wherein the system (100) further comprises over each section on the route from the sender (110) to the receiver (120) at least respective two disjunct quantum channels (130a, 130b) of respective glass fibers (150a, 150b) and at least one data channel (140) that is temporarily superimposed on the disjunct quantum channels (130a, 130b) of each glass fiber (150a, 150b) by random selection, wherein at least the sender (110) and the respective sender units (113) are designed to entangle at least two photons pairwise with one another and to send each photon via a respective quantum channel (130a, 130b) of the at least respective two quantum channels (130a, 130b) with a wavelength λ_{EQSE} over the respective following section on the route from the sender (110) to the receiver (120), wherein at least the sender (110) is furthermore designed to send, during a key transmission phase, at a randomly selected time and for a randomly selected duration, via the at least one data channel (140) wherein each data channel is superimposed by random selection on one of the at least respective two disjunct quantum channels (130a, 130b) for the randomly selected duration, the key material from the sender (110) to the receiver (120) wherein each intermediate station (111) comprises at least one optical switch (114) that is controlled by at least one control logic (118) which has a functional connection to at least one power sensor (117) wherein at each of the intermediate stations (111) there is provided at least one variable optical attenuator (116) which ensures that, outside the key transmission phase, a respective Bell measurement at the immediately following intermediate station (111) on the way to the receiver (120) or at the receiver (120), is not disturbed by a signal noise caused by the respective at least one optical fiber amplifier (115) wherein the at least one optical switch (114), the at least one optical fiber amplifier (115) and the at least one variable optical attenuator (116) are connected in series.

13. The system according to claim 12, configured to execute a method according to any one of claims 1 to 11.

14. A computer program product with a computer-readable medium and a computer program stored on the computer-readable medium with program coding means that are configured to execute a method according to any one of claims 1 to 11 when the computer program is run on a computer unit, particularly as a component of a system according to any one of claims 12 or 13.

## Patentansprüche

1. Verfahren zum abhörsicheren Austausch von Schlüsselmaterial zwischen einem Sender (110) und einem Empfänger (120) in einem Glasfasernetzwerk, wobei sich auf einer Route zwischen dem Sender (110) und dem Empfänger (120) eine oder mehrere Zwischenstationen (111) befinden, die die Route entsprechend in zwei oder mehr Abschnitte unterteilen, wobei jede Zwischenstation (111) eine Empfängereinheit (112), eine Sendereinheit (113) und mindestens einen Glasfaserverstärker (115) umfasst, wobei zeitlich nacheinander, ausgehend vom Sender (110), für jeden Abschnitt mindestens zwei Photonen paarweise miteinander verschränkt werden und jedes Photon über einen jeweiligen Quantenkanal (130a, 130b) einer jeweiligen Glasfaser (150a, 150b) mit einer Wellenlänge λ_{EQSE} über den jeweiligen Abschnitt gesendet wird, wobei die mindestens jeweiligen zwei Quantenkanäle auf dem jeweiligen Abschnitt relativ zueinander disjunkt sind, und wobei zu einem zufällig gewählten Zeitpunkt und für eine zufällig gewählte Dauer das Schlüsselmaterial in einer Schlüsselübertragungsphase über mindestens einen Datenkanal (140) von dem Sender (110) an den Empfänger (120) gesendet wird, wobei jeder Datenkanal (140) für jeden Abschnitt durch zufällige Auswahl einem der mindestens zwei disjunkten Quantenkanäle (130a, 130b) überlagert wird, wobei der mindestens eine Datenkanal (140) abschnittsweise durch den jeweiligen mindestens einen Glasfaserverstärker (115) verstärkt wird, wobei jede Zwischenstation (111) mindestens einen optischen Schalter (114) umfasst, der durch mindestens eine Steuerlogik (118) gesteuert wird, die in funktionaler Verbindung mit mindestens einem Leistungssensor (117) steht, wobei an jeder der Zwischenstationen (111) mindestens ein variabler optischer Abschwächer (116) vorgesehen ist, der dafür sorgt, dass außerhalb der Schlüsselübertragungsphase eine jeweilige Bell-Messung an der unmittelbar folgenden Zwischenstation (111) auf dem Weg zum Empfänger (120) oder am Empfänger (120) nicht durch ein Signalrauschen gestört wird, das durch den jeweiligen mindestens einen Glasfaserverstärker (115) verursacht wird, wobei der mindestens eine optische Schalter (114), der mindestens eine Glasfaserverstärker (115) und der mindestens eine variable optische Abschwächer (116) in Reihe geschaltet sind.

2. Verfahren nach Anspruch 1, wobei der mindestens eine optische Schalter (114) in seinem aktivierten Zustand die Photonen, die über einen jeweiligen unmittelbar vorangegangenen Abschnitt gesendet wurden, zu der jeweiligen Empfängereinheit (112) der jeweiligen Zwischenstation (111) leitet und in seinem deaktivierten Zustand den mindestens einen Datenkanal (140) in Abhängigkeit von einer auf einer jeweiligen Glasfaser (150a, 150b) an der jeweiligen Zwischenstation (111) erfassten Leistung über den unmittelbar folgenden Abschnitt fortführt.

3. Verfahren nach Anspruch 1 oder 2, wobei die Empfängereinheiten (112) an den jeweiligen Zwischenstationen (111) und der Empfänger (120) in zufällig gewählten Zeitintervallen einer jeweiligen Bell-Messung überprüfen, ob die von den jeweiligen Empfängereinheiten (112) bzw. dem Empfänger (120) empfangenen Photonen zum Zeitpunkt der jeweiligen Bell-Messung noch paarweise miteinander verschränkt sind.

4. Verfahren nach einem der vorangehenden Ansprüche, wobei für jeden Abschnitt ein Datenkanal (140) jeweils zur gleichen Zeit jedem der jeweiligen zwei disjunkten Quantenkanäle (130a, 130b) überlagert wird.

5. Verfahren nach Anspruch 4, wobei beide Datenkanäle (140) zufällig und unkorreliert zueinander aktiviert und deaktiviert werden.

6. Verfahren nach Anspruch 4, wobei beide Datenkanäle (140) synchron zueinander aktiviert und deaktiviert werden.

7. Verfahren nach einem der vorangehenden Ansprüche, wobei mindestens eine Zwischenstation (111) mindestens einen optischen Schalter umfasst, der in Übertragungsrichtung hinter dem jeweiligen mindestens einen optischen Verstärker (115) angeordnet ist und in seinem aktivierten Zustand einen des mindestens einen Datenkanals (140) zu einer anderen Route zwischen dem Sender (110) und einem anderen Empfänger führt, wobei die andere Route durch die gleiche Wellenlänge λ_{EQSE} nach einem der Ansprüche 1 bis 6 gesichert ist.

8. Verfahren nach Anspruch 7, das verwendet wird, um dynamisch eine komplexe vermaschte Netzwerktopologie für das abhörsichere Austauschen von Schlüsselmaterial zwischen dem Sender (110) und einem jeweiligen Empfänger zu erzeugen, wobei jede Route innerhalb der Netzwerktopologie durch die gleiche Wellenlänge λ_{EQSE} nach einem der Ansprüche 1 bis 6 gesichert ist.

9. Verfahren nach einem der vorangehenden Ansprüche, das auf eine Mehrzahl von Datenkanälen (140) zwischen dem Sender (110) und einem jeweiligen Empfänger in Form eines WDM erweitert ist, wobei die Datenkanäle (140) unterschiedliche Wellenlängen aufweisen und die mindestens jeweiligen zwei disjunkten Quantenkanäle (130a, 130b), die durch zufällige Auswahl von einem jeweiligen der Datenkanäle (140) überlagert werden, die gleiche Wellenlänge λ_{EQSE} für eine jeweilige Bell-Messung aufweisen wie der jeweilige eine der Datenkanäle (140).

10. Verfahren nach einem der vorangehenden Ansprüche, bei dem ein jeweiliger Quantenkanal (130a), der von einem jeweiligen Datenkanal (14) überlagert wird, für die Dauer der Übertragung des Schlüsselmaterials über den jeweiligen Datenkanal (140) deaktiviert und/oder abgeschaltet wird.

11. Verfahren nach einem der vorangehenden Ansprüche, wobei der Empfänger (120), sofern die jeweiligen Bell-Messungen zeigen, dass die jeweiligen Photonen über den jeweiligen Abschnitten noch verschränkt sind, feststellt, dass zum Zeitpunkt der jeweiligen Bell-Messungen kein potenzieller Interceptor auf einem der mindestens jeweiligen zwei Quantenkanäle (130a, 130b) über den jeweiligen Abschnitten und bei der Wellenlänge λ_{EQSE} existiert, und dem Sender (110) über den Datenkanal (140) die Schlüsselteile des während einer Schlüsselübertragungsphase, die die Momente der Bell-Messungen umfasst, oder der Zeit der Schlüsselübertragungsphase, die den Momenten der Bell-Messungen unmittelbar vorangeht, übertragenen Schlüsselmaterials bestätigt.

12. System zum abhörsicheren Austausch von Schlüsselmaterial zwischen einem Sender (110) und einem Empfänger (120) in einem Glasfasernetzwerk, wobei das System mindestens den Sender (110), den Empfänger (120), eine oder mehrere Zwischenstationen (111), die eine Route zwischen dem Sender (110) und dem Empfänger (120) entsprechend in zwei oder mehr Abschnitte unterteilen, umfasst, wobei jede Zwischenstation (111) eine Empfängereinheit (112), eine Sendereinheit (113) und mindestens einen Glasfaserverstärker (115) umfasst, wobei das System (100) ferner über jeden Abschnitt auf der Route vom Sender (110) zum Empfänger (120) mindestens jeweilige zwei disjunkte Quantenkanäle (130a, 130b) der jeweiligen Glasfasern (150a, 150b) und mindestens einen Datenkanal (140), der durch zufällige Auswahl zeitlich den disjunkten Quantenkanälen (130a, 130b) jeder Glasfaser (150a, 150b) überlagert wird, umfasst, wobei mindestens der Sender (110) und die jeweiligen Sendereinheiten (113) dazu ausgelegt sind, mindestens zwei Photonen paarweise miteinander zu verschränken und jedes Photon über einen jeweiligen Quantenkanal (130a, 130b) der mindestens jeweiligen zwei Quantenkanäle (130a, 130b) mit einer Wellenlänge λ_{EQSE} über den jeweiligen folgenden Abschnitt auf der Route vom Sender (110) zum Empfänger (120) zu senden, wobei mindestens der Sender (110) ferner dazu ausgelegt ist, während einer Schlüsselübertragungsphase zu einem zufällig gewählten Zeitpunkt und für eine zufällig gewählte Dauer über den mindestens einen Datenkanal (140), wobei jeder Datenkanal durch zufällige Auswahl einem der mindestens jeweiligen zwei disjunkten Quantenkanäle (130a, 130b) für die zufällig gewählte Dauer überlagert wird, das Schlüsselmaterial vom Sender (110) zum Empfänger (120) zu senden, wobei jede Zwischenstation (111) mindestens einen optischen Schalter (114) umfasst, der durch mindestens eine Steuerlogik (118) gesteuert wird, die in funktionaler Verbindung mit mindestens einem Leistungssensor (117) steht, wobei an jeder der Zwischenstationen (111) mindestens ein variabler optischer Abschwächer (116) vorgesehen ist, der dafür sorgt, dass außerhalb der Schlüsselübertragungsphase eine jeweilige Bell-Messung an der unmittelbar folgenden Zwischenstation (111) auf dem Weg zum Empfänger (120) oder am Empfänger (120) nicht durch ein Signalrauschen gestört wird, das durch den jeweiligen mindestens einen Glasfaserverstärker (115) verursacht wird, wobei der mindestens eine optische Schalter (114), der mindestens eine Glasfaserverstärker (115) und der mindestens eine variable optische Abschwächer (116) in Reihe geschaltet sind.

13. System nach Anspruch 12, das dazu konfiguriert ist, ein Verfahren nach einem der Ansprüche 1 bis 11 auszuführen.

14. Computerprogrammprodukt mit einem computerlesbaren Medium und einem auf dem computerlesbaren Medium gespeicherten Computerprogramm mit Programmcodierungsmitteln, die dazu konfiguriert sind, ein Verfahren nach einem der Ansprüche 1 bis 11 auszuführen, wenn das Computerprogramm auf einer Computereinheit, insbesondere als Komponente eines Systems nach einem der Ansprüche 12 oder 13, ausgeführt wird.

## Revendications

1. Procédé pour un échange de matériel de chiffrement à l'épreuve des écoutes entre un expéditeur (110) et un récepteur (120) dans un réseau de fibre de verre, une ou plusieurs stations intermédiaires (111) étant situées sur une route entre l'expéditeur (110) et le récepteur (120), divisant en conséquence la route en deux sections ou plus, chaque station intermédiaire (111) comprenant une unité réceptrice (112), une unité expéditrice (113) et au moins un amplificateur à fibre optique (115), au moins deux photons, partant séquentiellement dans le temps de l'expéditeur (110), étant enchevêtrés pour chaque section par paire l'un avec l'autre et chaque photon étant envoyé via un canal quantique respectif (130a, 130b) d'une fibre de verre respective (150a, 150b) ayant une longueur d'onde λ_{EQSE} sur la section respective, les au moins deux canaux quantiques respectifs sur la section respective étant séparés l'un par rapport à l'autre, et à un moment et pour une durée choisis de manière aléatoire, le matériel de chiffrement étant envoyé dans une phase de transmission de clé depuis l'expéditeur (110) au récepteur (120) via au moins un canal de données (140), chaque canal de données (140) pour chaque section étant superposé sur l'un des au moins deux canaux quantiques séparés respectifs (130a, 130b) par sélection aléatoire, le au moins un canal de données (140) étant amplifié par section par le au moins un amplificateur à fibre optique (115) respectif, chaque station intermédiaire (111) comprenant au moins un commutateur optique (114) qui est commandé par au moins une logique de commande (118) ayant une connexion fonctionnelle avec au moins un capteur de puissance (117), au moins un atténuateur optique variable (116) étant prévu dans chacune des stations intermédiaires (111) qui veille à ce que, en dehors de la phase de transmission de clé, une mesure de Bell respective à la station intermédiaire (111) immédiatement suivante sur le chemin du récepteur (120) ou au récepteur (120) ne soit pas perturbée par un bruit de signal causé par le au moins un amplificateur à fibre optique (115) respectif, le au moins un commutateur optique (114), le au moins un amplificateur à fibre optique (115) et le au moins un atténuateur optique variable (116) étant connectés en série.

2. Procédé selon la revendication 1, le au moins un commutateur optique (114) guidant, dans son état activé, les photons qui ont été envoyés sur une section immédiatement précédente respective à l'unité réceptrice respective (112) de la station intermédiaire respective (111) et faisant continuer, dans son état désactivé, le au moins un canal de données (140) sur la section immédiatement suivante en fonction d'une puissance captée sur une fibre de verre respective (150a, 150b) dans la station intermédiaire respective (111).

3. Procédé selon la revendication 1 ou 2, les unités réceptrices (112) dans les stations intermédiaires respectives (111) et le récepteur (120) vérifiant, à des intervalles de temps aléatoirement sélectionnés d'une mesure de Bell respective, si les photons reçus par les unités réceptrices respectives (112) et le récepteur (120), respectivement, sont toujours enchevêtrés par paires l'un avec l'autre au moment de la mesure de Bell respective.

4. Procédé selon l'une quelconque des revendications précédentes, pour chaque section un canal de données (140) étant superposé en même temps sur chacun des deux canaux quantiques séparés respectifs (130a, 130b), respectivement.

5. Procédé selon la revendication 4, les deux canaux de données (140) étant activés et désactivés de manière aléatoire et non corrélée l'un à l'autre.

6. Procédé selon la revendication 4, les deux canaux de données (140) étant activés et désactivés de manière synchrone l'un avec l'autre.

7. Procédé selon l'une quelconque des revendications précédentes, au moins une station intermédiaire (111) comprenant au moins un commutateur optique disposé dans le sens de la transmission derrière le au moins un amplificateur optique (115) respectif et conduisant dans son état activé l'un des au moins un canal de données (140) à une autre route entre l'expéditeur (110) et un autre récepteur, l'autre route étant sécurisée par la même longueur d'onde λ_{EQSE} selon l'une quelconque des revendications 1 à 6.

8. Procédé selon la revendication 7, utilisé pour générer dynamiquement une topologie de réseau maillé complexe pour échanger du matériel de chiffrement sans possibilité d'interception entre l'expéditeur (110) et un récepteur respectif, chaque route dans la topologie de réseau étant sécurisée par la même longueur d'onde λ_{EQSE} selon l'une quelconque des revendications 1 à 6.

9. Procédé selon l'une quelconque des revendications précédentes, qui est étendu à une pluralité de canaux de données (140) entre l'expéditeur (110) et un récepteur respectif sous la forme d'un MRL, les canaux de données ayant (140) différentes longueurs d'onde et les au moins deux canaux quantiques séparés respectifs (130a, 130b) qui sont superposés par sélection aléatoire par l'un respectif des canaux de données (140) ayant la même longueur d'onde λ_{EQSE} lors d'une mesure de Bell respective que l'un respectif des canaux de données (140).

10. Procédé selon l'une quelconque des revendications précédentes, un canal quantique respectif (130a) qui est superposé par un canal de données respectif (14) étant désactivé et/ou éteint pendant la durée de la transmission du matériel de chiffrement via le canal de données respectif (140).

11. Procédé selon l'une quelconque des revendications précédentes, le récepteur (120), à condition que les mesures de Bell respectives montrent que les photons respectifs sont encore enchevêtrés sur les sections respectives, déterminant qu'au moment des mesures de Bell respectives, aucun intercepteur potentiel n'existe sur aucun des au moins deux canaux quantiques respectifs (130a, 130b) sur les sections respectives et sur la longueur d'onde λ_{EQSE}, et confirmant à l'expéditeur (110) via le canal de données (140) les parties clés du matériel de chiffrement transféré pendant une phase de transmission de clé comprenant les moments des mesures de Bell ou le temps de la phase de transmission de clé précédant directement les moments des mesures de Bell.

12. Système pour un échange de matériel de chiffrement à l'épreuve des écoutes entre un expéditeur (110) et un récepteur (120) dans un réseau de fibre de verre, le système comprenant au moins l'expéditeur (110), le récepteur (120), une ou plusieurs stations intermédiaires (111) divisant en conséquence une route entre l'expéditeur (110) et le récepteur (120) en deux sections ou plus, chaque station intermédiaire (111) comprenant une unité réceptrice (112), une unité expéditrice (113) et au moins un amplificateur à fibre optique (115), le système (100) comprenant en outre respectivement, sur chaque section de la route de l'expéditeur (110) au récepteur (120), au moins deux canaux quantiques séparés respectifs (130a, 130b) d'une fibre de verre respective (150a, 150b) et au moins un canal de données (140) qui est temporairement surimposé sur les canaux quantiques séparés (130a, 130b) de chaque fibre de verre (150a, 150b) par sélection aléatoire, au moins l'expéditeur (110) et les unités expéditrices respectives (113) étant conçus pour enchevêtrer au moins deux photons par paire l'un avec l'autre et d'envoyer chaque photon via un canal quantique (130a, 130b) respectif des au moins deux canaux quantiques (130a, 130b) respectifs ayant une longueur d'onde λ_{EQSE} sur la section respective suivante sur la route de l'expéditeur (110) au récepteur (120), au moins l'expéditeur étant en outre conçu pour envoyer, pendant une phase de transmission de clé, à un moment sélectionné aléatoirement et pour une durée sélectionnée aléatoirement, via le au moins un canal de données (140), chaque canal étant surimposé par sélection aléatoire sur l'un des au moins deux canaux quantiques séparés (130a, 130b) respectifs pendant la durée aléatoirement sélectionnée, le matériel de chiffrement de l'expéditeur (110) au récepteur (120), chaque station intermédiaire (111) comprenant au moins un commutateur optique (114) qui est commandé par au moins une logique de commande (118) qui a une connexion fonctionnelle avec au moins un capteur de puissance (117), à chacune des stations intermédiaires (111) étant fourni au moins un atténuateur optique variable (116) qui veille à ce que, en dehors de la phase de transmission de clé, une mesure de Bell à la station intermédiaire (111) immédiatement suivante sur le chemin vers le récepteur (120) ou au récepteur (120) ne soit pas perturbée par un bruit de signal causé par le au moins un amplificateur à fibre optique (115) respectif, le au moins un commutateur optique (114), le au moins un amplificateur à fibre optique (115) et le au moins un atténuateur optique variable (116) étant connectés en série.

13. Système selon la revendication 12, configuré pour exécuter un procédé selon l'une quelconque des revendications 1 à 11.

14. Produit de programme informatique doté d'un support lisible par ordinateur et programme informatique mémorisé sur le support lisible par ordinateur doté de moyens de codage de programme qui sont configurés pour exécuter un procédé selon l'une quelconque des revendications 1 à 11 lorsque le programme informatique est exécuté sur une unité informatique, particulièrement en tant que composant d'un système selon l'une quelconque des revendications 12 ou 13.
